# NEW EUROPEAN PATENT SPECIFICATION

(11) **EP 2 152 087 B2**
(45) Date of publication and mention of the opposition decision: **01.04.2020**
(45) Mention of the grant of the patent: 01.03.2017
(21) Application number: 08741692.1
(22) Date of filing: 05.05.2008
(51) Int. Cl.: A23C 9/13, A23C 9/142, A23C 9/152, A23C 9/154, A23C 9/156

(54) **LOW-CALORIE MILK PRODUCTS**
KALORIENARME MILCHPRODUKTE
PRODUITS LAITIERS HYPOCALORIQUES

(30) Priority: 04.05.2007 NL 1033804
(43) Date of publication of application: 17.02.2010
(73) Proprietor: FrieslandCampina Nederland B.V., 3818 LE Amersfoort (NL)
(72) Inventor: NAVARRO Y KOREN, Maria Isabel, NL-6861 AH Oosterbeek (NL); LEENDERS, Gerardus Jozef Maria, NL-6717 XC Ede (NL)
(74) Representative: FrieslandCampina Nederland B.V.
(86) International application number: PCT/NL2008/050271
(87) International publication number: WO 2008/136671

(56) References cited:
- EP-A- 0 203 706
- EP-A- 1 407 673
- WO-A-2006/058083
- WO-A1-03/094623
- US-A- 5 358 730
- US-A- 5 683 984
- US-A1- 2005 181 092
- US-A1- 2006 172 058
- US-A1- 2006 182 868

## Description

The invention relates to a method for the preparation of milk products having a reduced caloric value. In particular, the invention relates to a method for the preparation of tasty low-lactose, low-calorie milk products having an attractive appearance.

Milk and dairy products are nutritious foods which make an important contribution to a good nutrition. The most important food components of cow's milk are water (ca. 89 %), lactose or milk sugar (ca. 4.5 %), high-quality proteins (ca. 3.6 %) (rich in essential amino acids) and fats. For consumption, typically, especially the fat content is reduced.

Especially skimmed milk is suitable for use in a low-calorie diet. Skimmed milk is milk from which the cream has been separated, having a fat content of virtually 0%. A drawback of skim milk, however, is that it has a flat, watery taste, a gray color and that its mouthfeel is experienced by the consumer as unappealing. Moreover, skim milk still contains a considerable amount of calories, stemming for a considerable part, some 55%, from the lactose present.

Another drawback of lactose-containing milk products in general is that they are not suitable for persons having a lactose intolerance. To digest lactose, an enzyme is needed, a lactase. Lactase is produced in the small intestine wall. If the lactase is not produced, or insufficiently so, lactose finds its way, undigested, into the large intestine where the intestinal bacteria present there (intestinal flora) are going to 'ferment' the lactose. This can give rise to complaints such as abdominal pain, cramps, diarrhea, flatulence and a bloated feeling. The treatment of lactose intolerance consists in the prevention of the complaints by limiting or avoiding lactose in the food. Possibly, enzyme preparations with the enzyme lactase may be used. When milk (products) from food are limited or even left out altogether, deficiencies of calcium and vitamin B2 may arise. It is important to supplement these in a different manner. Guidance from a dietician is necessary then.

For that matter, an amount of 6-7 g of lactose does not yet induce any symptoms of lactose intolerance in individuals having hypolactasia (see for instance Hertzler et al. in J Am. Diet Assoc. 1996; 96:243-6; and Vesa et al. in Am. J. Clin. Nutr. 1996; 64:197-201). An amount of lactose (12 g) that normally occurs in a single cup of 240 ml of milk is still tolerated by most people having hypolactasia ("lactose maldigesters") (see for instance Villako & Maaroos in Scand. J. Gastroenterol. Suppl. 1994; 202:36-54; Jarvis & Miller in J. Natl. Med. Assoc. 2002; 94:55-66; and Suarez et al. in N. Engl. J. Med. 1995 6; 333:1-4). Upon administration of an amount of 50 g of lactose, 80-100% of this group of individuals are troubled by symptoms of lactose intolerance (see for instance Bayless et al. in N. Engl. J. Med. 1975; 292 1156-9 and Newcomer et al. in Gastroenterology. 1978;74:44-6).

There is a need for a visually attractive low-calorie milk product, and which is also suitable for use in a low-lactose or non-lactose diet. Preferably, the milk product has an appealing taste and mouthfeel, in any case improved over ordinary skim milk. More preferably still, such a milk product is less slimy, and hence allows more readily of "continuous drinking" than conventional milk and milk drinks.
This need, and preferably also the preferences mentioned, are met according to the invention by the provision of a method for the preparation of a low- calorie milk product having a caloric value lower than 38 kcal/100 ml.

The term percent by weight denotes the weight based on the total weight of the end product, a liquid or semiliquid milk product.

US2006/0172058 relates to a system, processes and milk -based food products in which cream is separated from milk to produce an ultra-low fat milk product. The milk product is microfiltered to produce a retentate that is ready to drink and is high in protein. The product may contain less lactose per unit of calcium of protein. The examples concern concentrated protein products having a protein content of 7.5-8.2 wt% and a lactose content of 5.0 to 0.3 wt%.

European patent application EP1407673-A1 relates to non-gelling concentrated milk products and methods for producing them. Pasteurized skim milk is subjected to microfiltration using membranes having a pore size of 100 nm. The retentate is supplemented with citrate buffer, then diafiltered and ultrafiltered with water to allow for lactose removal.

European patent application EP0203707-A2 discloses a milk preparation suitable for diabetics and lactose-intolerant persons, and a process for preparing it. The process involves ultrafiltration or chromatography for separating lactose from the milk, and then adding fructose or aspartame.

US 5,358,730 discloses a method wherein skim milk is subjected to ultrafiltration and diafiltration. The products of Examples 1 and 2 of US 5,358,730 have a casein to whey protein ratio of about 85:15. The fat content in Example 1 is 4.4%. In Example 7, a product having a lactose content of 0.2% and a casein content of 11.5wt% is disclosed.

WO2006/058083 is about milk serum (whey) protein concentrates that are high in protein, typically about 10% by weight or higher. Thus, similar to US2006/0172058 and EP1407673-A1, it discloses milk concentrates having a protein content above that of unprocessed milk.

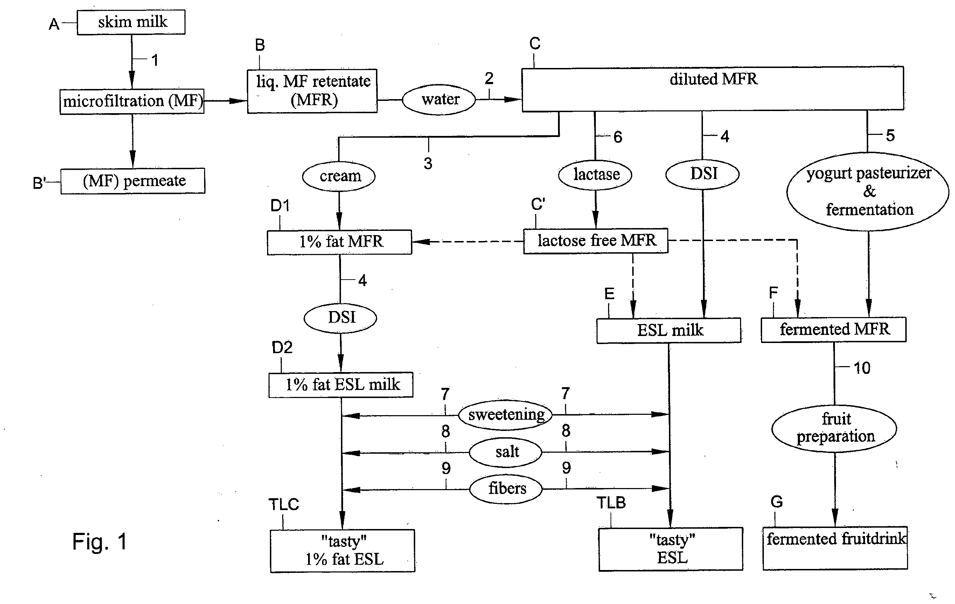

US2006/182868 relates to cheese making. As can be derived from Figure 1, the MF permeate comprising the casein is processed to produce a natural casein isolate. Microfiltration increases the protein concentration.

The caloric value of a milk product prepared according to the method of the invention is lower than that of skim milk, that is, lower than about 162 kilojoules (kJ) or 38 kilocalories (kcal) per 100 ml. Preferably, the product has a caloric value of less than 30 kcal/100 ml. Particularly suitable for use in a low-calorie diet is a milk product with only 15-25 kcal / 100 ml, or lower still.

Preferably, the milk product prepared according to the method of the invention contains more milk protein than lactose, based on weight. Milk protein and lactose are for instance present in a low-lactose product in a ratio of about 3:1.

The lactose content is preferably lower than 2 wt.%, more preferably lower than 1.5 wt.%. The product contains for instance between about 1.3 and 1.4 wt.% of lactose. With such a two- to threefold reduction of the amount of lactose with respect to normal milk, such a milk product is suitable for use in a limited-lactose and/or low-calorie diet.

In another embodiment, the milk product prepared according to the method of the invention is substantially free of lactose, that is to say, it contains less than 0.1 wt.% of lactose. As a result, the product is well tolerable by individuals having a lactose intolerance.

From the viewpoint of the caloric or energetic value, the fat content of a milk product prepared according to the method of the invention is lower than 1.5 wt.%, preferably about 1.3 wt.% and more preferably maximally about 1.0 wt.%. For a very low caloric value, a still lower fat content is desirable, for instance less than 1 wt.% or virtually free of fat, with 0 to 0.3 wt.% of fat. However, the presence of some (milk) fat is desirable for the sake of the taste and the mouthfeel of the milk product. This appears from the watery sensation of the current skim milk with about 0 wt.% of fat and a caloric value of circa 38 Kcal/100 ml. The present invention is based partly on the insight that by wholly or partly removing lactose from the milk, also the caloric value thereof is reduced. This affords the possibility of adding, or keeping present, some (milk) fat for the benefit of the taste and/or the mouthfeel, while maintaining a low-caloric value. The method of the invention provides for instance a tasty milk product comprising about 1.4 wt.% of lactose, about 3.8% of protein and about 1 wt.% of fat, while the caloric value is only about 31 Kcal/100 ml. It has been found, especially, that the low-calorie milk products prepared according to the method of the invention are less slimy and hence allow well of "continuous drinking".

The total protein content is typically between about 2.5 and 4 wt.%, for instance between 3.0 and 3.5 wt.%. Although the protein will mostly consist of milk proteins, it is also possible that non-milk proteins are present in the product, such as soy proteins. Natural protein from cow's milk (i.e. milk protein) comprises roughly about 80% of micellar casein and about 20% of whey protein. The whey proteins constitute a heterogeneous mixture, of which the chief proteins are β-lactoglobulin, α-lactalbumin, blood serum albumin (BSA) and immunoglobulins (Ig).

In a milk product prepared according to the method of the present invention, the ratio between casein and whey proteins is greater than that in raw milk. The product hence contains relatively more casein and/or less whey protein. The ratio of casein to whey proteins is at least 85:15, preferably at least 90:10, as 95:5, 97:3, 98:2 or 99:1. The term casein as used herein comprises all types and forms of casein and caseinates by nature present in cow's milk, including α-s1-casein, α-s2-casein, β-casein and κ-casein.

A selective enrichment for casein with respect to whey proteins can be efficiently achieved using microfiltration, abbreviated to MF. MF is a pressure-driven membrane filtration process whereby a separation is made based on particle size. This separation is obtained by a semipermeable material which is called the membrane. The specific pore size for MF is in the range of 0.01 to 20 mm. Because of the relatively large pores, only a slight pressure difference is necessary: from 0.1 to 4 bars. Casein in milk is substantially present in the form of casein micelles, which are distinguished in size (50-500 nm) from the globular (whey) proteins which have a dimension of 3 to 6 nm. Most casein micelles have a diameter between about 150 and 200 nm (see for instance Figure 1 of NL 1015851). When using an MF membrane having for instance a pore size between 100 and 500 nm, and preferably between 150 and 450 nm, then during microfiltration of milk *inter alia* the casein micelles remain behind in the retentate, while the permeate contains mainly the smaller, soluble components such as (whey) proteins, sugars such as lactose, minerals and salts. As described below in the method, the desired casein/whey protein ratio is obtained utilizing MF to a preferred concentration factor in the retentate of at least 2-4.

Microfiltering milk therefore leads to a retentate with an increased casein content and a reduced level of *inter alia* whey proteins, sugars and milk salts with respect to the starting material. However, the loss of sugars and salts by the MF process has consequences for the taste of the milk product. In order to prepare a product that is attractive to the consumer, the (diluted) retentate is therefore supplemented with salts and/or sweeteners, preferably both salts and sweeteners, so that the taste corresponds to that of ordinary milk, or at least approximates it.

The nutrient salts sodium and/or potassium salts are used in a milk product prepared according to the method of the invention, for instance NaCl and KCl. These ions already occur in milk by nature. The skilled person is able to determine the optimum salt concentration in an empirical manner. Good results were obtained by the inventors utilizing between 0.05 and 0.2 wt.% of salt, for instance 0.1 wt.% of NaCl. Incidentally, very suitably, a milk salt preparation from cow's milk may be used. Such salt preparations are commercially available, such as the product Vivinal MCA (ex Domo, Netherlands).

All current (soluble) sweeteners can be used, such as natural and synthetic sweeteners which are customary in the food industry at present. Preferred for use in a low-calorie product as described herein are low-calorie sweeteners, such as aspartame, saccharin, sucrolose, acesulfame, neohesperidin, and combinations thereof. The skilled person is able to determine the optimum concentration of sweetener in an empirical manner. A good taste sensation was achieved by the inventors utilizing between about 25 and 50 mg/liter of sweetener, preferably chosen from the group just mentioned, e.g. 40 mg/ml of aspartame.

Studies have shown that the visual properties of milk have a great influence on the taste sensation and the mouthfeel of a low-fat or non-fat milk product. An increase of the so-called whitening power proves to make the largest contribution towards increasing the appeal of a low-fat milk product for the consumer. Several techniques have been developed for improving the appearance of low-fat or non-fat milk products. These concern especially the addition of chemical or biological additives. See for instance WO/2000/005971 and the references cited therein.

Surprisingly, it has been found that the above-mentioned MF step yields a low-calorie milk product with a high whitening power. For instance, a low-calorie milk according to the invention was appreciably whiter in color than a non-fat milk from the prior art. This whitening power can be qualified with the CIE-L*a*b method or CIELAB system. The CIELAB system is a color space. CIELAB has been developed by the Commission Internationale de l'Eclairage (CIE) and is based on additive color mixing. At the angles of an equilateral triangle are the three main colors B (blue, 435.8 nm), G (green, 541.6 nm) and R (red, 700 nm). The tristimulus values used by the CIE are based on these primary colors. B = Z, G = Y, and R = X. Each color can be represented with unique values of X, Y and Z. Because in the denotation with x, y and z it is difficult to assess on the basis of the numbers what color you are describing, often a conversion to L*a*b* values is made. That conversion is described in the CIE standards and for that reason is called CIELAB. L* is the lightness axis, going from 0 which is black to + 100 which is white. The a*-axis goes from -60 (green) to +60 (red). The b*-axis also goes from -60 (blue) to +60 (yellow). So, with three L*a*b* axes which are perpendicular to each other, an elliptical space is described into which all colors fit.

With this method, for a 0%-fat milk (reference), an L-value of 88.22 (6 0.11), an a-value of -5.70 (6 0.02), and a b-value of 10.63 (6 0.12) are found, while a low-calorie milk prepared according to the method of the invention shows the following values: L-value 89.13 (6 0.02), a-value -4.73 (6 0.02) and b-value 7.68 (6 0.02).

In a preferred embodiment, the low-calorie milk product prepared according to the method of the invention has an L-value greater than 88.5 and/or an a*-value within the range of 0 plus or minus 5.5 and/or a b*-value within the range of 0 plus or minus 10.0. More preferably, the L-value is greater than 89 and/or an a*-value within the range of 0 plus or minus 5.0 and/or a b* value within the range of 0 plus or minus 9.0.

To improve the organoleptic properties of a milk product prepared according to the method of the invention, in a preferred embodiment, soluble dietary fibers may be added, such as polydextrose, galacto-oligosaccharides (GOS), inulin, oligofructose or a combination thereof. Inulin, oligofructose and GOS are prebiotic ingredients which are known in the food and beverage industry for their favorable properties, and are used as fat imitations, stabilizers and sugar replacements.

Good results were obtained by addition of between about 0.5 and 2 wt.% of dietary fiber, but other amounts may also be used, depending on the type of fiber and/or the desired properties of the milk product.

Further, one or more additives may be added which are capable of favorably influencing in any way the properties of the product, such as the taste, the consistency, the stability, the appearance, the storage life or the nutritional value of the product. Examples of useful additives comprise flavoring, vitamins such as vitamin C, B2, B6, B12, thickeners such as starch, guar gum or (bovine) gelatin, coloring such as β-carotene or carminic acid, emulsifiers, nutrient acids such as citric acid, fruit preparations and fruit juices.

It will be clear that a milk product prepared according to the method of the invention can have different qualities, depending on the method of preparation and/or additional ingredients. As will be further elucidated below, it is for instance possible to ferment the milk product to yield a low-calorie, low-lactose, fermented milk product. The milk product is for instance a milk, a (fruit) yogurt, a (fruit) yogurt drink, a kwark (soft curd cheese) or a vla (Dutch-type custard).

Further, the present invention is not limited to the preparation of cow's milk products, and the present invention can also be used for the preparation of low-calorie, low-lactose or non-lactose products from milk from other mammals. Preferably, the milk to be used contains comparable amounts of lactose and casein to cow's milk, or possibly less lactose and/or more casein. Suitable are *inter alia* buffalo milk and goat's milk. Thus, the invention also provides a method for preparing a buffalo milk product (which usually has a higher protein content and contains comparatively slightly more casein than cow's milk), a horse milk product (about 1.9% of protein, 6.9% of lactose, 35-40% of whey protein) or a goat's milk product (about 22.5-24.0% of whey protein of the total protein).

The present invention accordingly concerns a method for the preparation of a tasty low-calorie milk product having a caloric content lower than 38 kcal/100ml. The method comprises the steps of a) filtering skim milk by means of microfiltration utilizing a membrane having a pore size between about 100-500 nm, to a concentration factor of the retentate with a factor of at least 2-4 to result in a retentate having a reduced lactose content and an increased ratio between casein and whey proteins (also referred to as "casein concentrate"); b) diluting the retentate to about 2.5-4 wt.% of protein, preferably with water, and c) adding between 0.05 and 0.2 wt% of salt and optionally sweeteners and/or soluble dietary fibers in an amount sufficient to give the product an attractive taste.

For instance, when the starting material is skimmed cow's milk, which has optionally, though preferably so, been subjected to a thermizing treatment (heating to maximally 60 °C) and/or bactofugation, then, by the microfiltration process, the total protein level is increased in the MF retentate from about 3.6 wt.% to 10-12 wt.%, with the ratio of casein to whey protein increasing to about 85/15 and preferably to about 90/10 and higher. The lactose content of the MF retentate is reduced to about 4 wt.%. Diluting the MF retentate to a protein content corresponding to current milk products, i.e. 3-4 wt.%, yields a low-calorie consumption milk product according to the invention with less than 1.6 wt.% of lactose. The diluted retentate has a strikingly white color, presumably because it no longer contains any whey proteins which have a green basic color. Further, this milk gives a less slimy mouthfeel.

To "correct" the taste and the mouthfeel of the diluted casein concentrate, the above-mentioned salts, sweeteners and dietary fibers can be used in the preferred amounts mentioned.

To prepare a product that is suitable for a non-lactose diet, the method can furthermore comprise a treatment with lactose-hydrolyzing enzyme. Such a treatment is known from the art (see for instance CA 2 260 673) and usually comprises the use of the enzyme lactase which breaks down lactose to galactose and glucose. Usually, the lactase treatment is carried out after the diluted retentate has undergone a heat treatment, for instance a pasteurization at 80°C for about 15 seconds or a very brief heating at 135°C, a conventional UHT treatment. Suitable lactase enzymes are β-galactopyranosidase, β-galactosidase, β-D-galactoside galacto-hydrolase, and mixtures thereof. Through the lactase treatment, the lactose content in the diluted retentate, being for instance less than 2 wt.%, may be reduced to less than 1 and preferably to less than 0.1 wt.%. In a preferred embodiment, the lactose content after the enzymatic treatment is not detectable.

Another possibility of removing residual lactose from the diluted retentate comprises washing out lactose by means of diafiltration with water being added to the retentate during microfiltration or possibly ultrafiltration to further remove the lactose.

The low-lactose or non-lactose diluted retentate is preferably subjected to a heat treatment (sterilization) in order to increase the storage life of the milk product. This comprises for instance heating to circa 72°C, followed by brief heating above 100°C (usually 0.5 to 1 second at 135°C) to kill all bacteria, and fast cooling to 72°C. After cooling to below room temperature, the product may be aseptically filled into a suitable package such as 0.5- or 1-liter containers.

Optionally, prior to the heat treatment, an amount of fat, preferably milk fat, is added to the diluted retentate in order to give the product a fuller taste. For instance, cream is added up to 1 wt.% of fat.

As indicated above, the invention further provides a method for the preparation of a fermented low-calorie milk product, such as a low-calorie yogurt or a fermented milk drink. To this end, the diluted retentate may be subjected to a pasteurization step (e.g. heating for 5 minutes at 92°C) followed by a fermentation step in which, using lactic acid bacteria, the lactose present is converted to lactic acid. For the preparation of yogurt, minimally 1 wt.% of lactose still needs to be present in the diluted retentate. Optionally, conventional thickeners such as starch and gelatin and other conventional additives may be added. In a specific embodiment, for a fermented milk product, goat's milk is used.

A method according to the invention may further comprise the addition of fruit preparation, for instance a fruit pulp, fruit parts, fruit puree or fruit juice. In a specific embodiment, the method comprises adding a fruit preparation to a fermented milk product according to the invention, for instance to produce a sour fruit drink or fruit yogurt. The amount of fruit preparation to be added depends on the kind of preparation (e.g. concentration) and the desired properties of the product, such as taste and consistency.

Further, a method for the preparation of a low-calorie milk product, whether fermented, unfermented, low-lactose or non-lactose, can comprise the addition of one or more additives. Useful additives are *inter alia* flavoring, vitamins such as vitamin C, B2, B6, B12, thickeners such as starch, guar gum, carrageen or bovine gelatin, coloring such as β-carotene or carminic acid, emulsifiers and nutrient acids such as citric acid. The addition of additives is preferably carried out prior to the earlier-mentioned heat treatment.

The prepared product may subsequently be (aseptically) filled into a suitable package, such as a cup, bottle or carton made of standard material such as laminated paperboard, plastic or glass.

A milk product prepared by the method as described herein can be used with advantage as a food, in particular in a low-calorie and/or low-lactose or non-lactose diet. Also, sports or recovery drinks or food supplements may be prepared; these typically contain a high protein content higher than 3.5 wt.%.

### Description of the drawing

Fig. 1 shows a schematic representation of the different parts of the process according to the invention, leading to different products. A fluid MF retentate is prepared through microfiltration of skimmed milk. This MF retentate is diluted with water, whereupon different products can be prepared. Examples of products are a non-fat or 1%-fat milk with extended shelf life (ESL), a fermented fruit drink or a non-lactose milk.

### Examples

The invention is illustrated further in and by the following non-limiting examples.

### Example 1 : Preparation of a casein concentrate

Fresh raw (cow's) milk was first skimmed, rendered germfree with a bactofuge and thermized (15 seconds at 68°C). Then the milk was microfiltered in a system which was equipped with spirally wound membranes having an average pore size of 0.15 mm (DSS, FSM 0.15PP/48 mil). Microfiltration was carried out at 10°C and an average transmembrane pressure of 1.5 bar, whereby the milk was concentrated to a concentration factor of 3.3. In Table 1.1 the composition of the obtained retentate is represented in comparison with that of the skim milk before microfiltration.

**Table 1.1: Composition MF retentate in comparison with skim milk.**

| | Skim milk | MF retentate |
|---|---|---|
| True protein | 3.39 | 10.39 |
| Casein | 2.84 | 8.90 |
| Whey protein | 0.55 | 1.49 |
| Lactose | 4.88 | 4.39 |
| | | |
| Casein : whey protein | 84:16 | 86:14 |
| Protein : lactose | 41:59 | 70:30 |

### Example 2 : Preparation of a low-lactose, non-fat milk (TLB)

To the MF retentate (MCC) from Example 1 were added: water, salt, sweetener and dietary fibers according to the recipe in Table 2.1. Thereupon the obtained TLB milk was heated for 1 sec at 135°C (High Pasteurization). This was followed by cooling to circa 65°C, after which homogenization was carried out at 150 bar; this was followed by deep cooling to 5°C. After filling into packaging, this milk was found to have a storage life of minimally three weeks at 7°C in the cold store.

**Table 2.1: Recipe, composition and some properties of low-lactose, non-fat milk (TLB)**

| | skim milk reference | low-lactose non-fat milk |
|---|---|---|
| Recipe: | | |
| MCC | | 32% |
| skim milk | 100 % | |
| water | | 67% |
| milk fat | 0% | 0 % |
| K / Na salts | | 0.15% |
| sweeteners | | 0.01% |
| dietary fiber | | 0.5% |

| Composition: | | |
|---|---|---|
| protein | 3.5% | 3.4% |
| lactose | 4.6% | 1.4% |
| whey protein : casein | 20 : 80 | 14 : 86 |
| Properties: | | |
| kCal | 32 | 23 |
| color | gray/yellow | white |
| taste | | like skim milk |

### Example 3 : Preparation of a low-lactose, 1% fat milk (TLC)

To the MF retentate (MCC) from Example 1 were added: water, salt, sweetener and dietary fibers according to the recipe in Table 3.1. Thereupon the obtained TLC milk was heated for 1 sec at 135°C (High Pasteurization). This was followed by cooling to circa 65 °C, and a homogenization was carried out at 150 bar; this was followed by deep cooling to 5°C. After filling into packaging, this milk was found to have a storage life of minimally three weeks at 7°C in the cold store.

**Table 3.1: Recipe, composition and some properties of low-lactose, 1% fat milk (TLC)**

| | low-fat milk reference | low-calorie milk |
|---|---|---|
| Recipe: | | |
| MCC | | 32% |
| skim milk | 100 % | |
| water | | 66% |
| milk fat | 1.5% | 1.0 % |
| K / Na salts | | 0.15% |
| sweeteners | | 0.01% |
| dietary fiber | | 0.25% |

| Composition: | | |
|---|---|---|
| protein | 3.5% | 3.4% |
| lactose | 4.6% | 1.4% |
| whey protein : casein | 20 : 80 | 14 : 86 |

| Properties: | | |
|---|---|---|
| kCal | 46 | 32 |
| color | grey/white | very white |
| taste | | like low-fat milk |

### Example 4: Preparation of a yogurt

**Table 4.1. Recipe, composition and properties of low-lactose yogurt**

| | Low-fat Yogurt reference | low-lactose yogurt |
|---|---|---|
| Recipe: | | |
| MCC | | 33% |
| skim milk | 97.5% | 10 |
| skim milk powder | 1% | |
| water | | 66% |
| milk fat | 1.5% | 1.0 % |
| K / Na salts | | 0.15% |
| sweeteners | | 0.01% |
| dietary fiber | | 0.5% |

| Composition: | | |
|---|---|---|
| protein | 4 % | 4 % |

| | Low-fat Yogurt reference | low-lactose yogurt |
|---|---|---|
| lactose | 5.2 | 2.0 |
| whey protein : casein | 20 : 80 | 14: 86 |

| Properties: | | |
|---|---|---|
| kCal | 50 | 33 |
| color | gray/white | white |
| taste | like low-fat yogurt | like low-fat yogurt |

Yogurt milk prepared according to the above recipe was heated to ca. 65°C, homogenized at 150 bar, then pasteurized for 5 minutes at 92°C and cooled to ca. 35°C (=fermentation temperature).

After inoculation with a yogurt starter (Code 96 and Code 95 CSK Netherlands) the milk was fermented to a pH of ca. 4.3. The fermented milk was stirred smooth, cooled and filled into packaging.

### Example 5: Preparation of a low-lactose vla

**Table 5.2. Recipe, composition and properties of lactose- and low-sugar vla**

| | skimmed vla reference | low-lactose and low-sugar vla |
|---|---|---|
| Recipe: | | |
| MCC | | 29% |
| skim milk | 88 % | |
| water | | 61% |
| milk fat | 0 | 1.0 % |
| starch | 4% | 4.5 |
| sugar | 7% | 3 |
| carrageen | 0.03 | 0.04 |
| coloring / flavoring | 0.02 | 0.02 |
| K / Na salts | | 0.15% |
| sweeteners | | 0.05% |
| dietary fiber | | 1.0% |

| Composition: | | |
|---|---|---|
| protein | 3.2 % | 3.2% |
| sugars including lactose | 11 | 5.0 |
| whey protein : casein | 20 : 80 | 14: 86 |

| Properties: | | |
|---|---|---|
| kCal | 75 | 45 |
| color | gray/yellow glassy | warm yellow |
| taste | like skim vanilla vla | more creamy vanilla vla |

Vlamix was prepared according to the above recipe, followed by a heat treatment of 10 seconds at 125 °C, cooling to 7°C and filling.

## Claims

1. A method for the preparation of a tasty low-calorie milk product having a caloric value lower than 38 kcal/100 ml, comprising:
- filtering skim milk by means of microfiltration (MF) utilizing a membrane having a pore size between about 100-500 nm, to a concentration of the retentate up to a factor of 2-4;
- diluting the MF retentate to about 2.5-4 wt% of protein, preferably with water, and
- adding between 0.05 and 0.2 wt% of salt, and optionally sweeteners and/or soluble dietary fibers in an amount sufficient to give the product an attractive taste.

2. A method according to claim 1, further comprising a treatment with a lactose-hydrolyzing enzyme.

3. A method according to claim 1 or 2, further comprising a heat treatment.

4. A method according to any one of claims 1-3, further comprising a pasteurization and a fermentation step wherein the product to be fermented contains minimally 1 wt% of lactose.

## Patentansprüche

1. Verfahren zur Herstellung eines schmackhaften, kalorienarmen Milchprodukts mit einem Kalorienwert unter 38 kcal/100 ml, umfassend:
- Filtern von Magermilch mittels einer Mikrofiltration (MF) unter Verwendung einer Membran mit einer Porengröße zwischen ungefähr 100-500 nm bis zu einer Konzentration des Retentats bis zu einem Faktor von 2-4;
- Verdünnen des MF-Retentats auf ungefähr 2,5-4 Gew.-% Protein, bevorzugt mit Wasser, und
- Hinzufügen von zwischen 0,05 und 0,2 Gew.-% Salz und optional Süßstoffen und/oder löslichen Ballaststoffen in einer Menge ausreichend, um dem Produkt einen angenehmen Geschmack zu verleihen.

2. Verfahren nach Anspruch 1, ferner umfassend eine Behandlung mit einem lactosehydrolysierenden Enzym.

3. Verfahren nach einem der Ansprüche 1 oder 2, ferner umfassend eine Wärmebehandlung.

4. Verfahren nach einem der Ansprüche 1-3, ferner umfassend einen Pasteurisierungs- und einen Fermentierungsschritt, wobei das zu fermentierende Produkt mindestens 1 Gew.-% Lactose enthält.

## Revendications

1. Procédé de préparation d'un produit laitier hypocalorique savoureux ayant une valeur calorique inférieure à 38 kcal/100 ml, comprenant les étapes suivantes :
- la filtration de lait écrémé au moyen d'une microfiltration (MF) utilisant une membrane ayant une grosseur de pore comprise entre environ 100 et 500 nm, jusqu'à une concentration du rétentat pouvant atteindre le facteur de 2-4 ;
- la dilution du rétentat MF jusqu'à environ 2,5 à 4 % en poids de protéine, de préférence avec de l'eau, et
- l'ajout de 0,05 à 0,2 % en poids de sel, et éventuellement d'édulcorants et/ou de fibres alimentaires solubles, en une quantité suffisante pour donner un produit ayant un goût agréable.

2. Procédé selon la revendication 1, comprenant en outre un traitement avec une enzyme d'hydrolyse du lactose.

3. Procédé selon la revendication 1 ou 2, comprenant en outre un traitement thermique.

4. Procédé selon l'une quelconque des revendications 1 à 3, comprenant en outre une étape de pasteurisation et une étape de fermentation, dans lequel le produit à fermenter contient un minimum de 1 % en poids de lactose.
